# EUROPÄISCHE PATENTSCHRIFT

(11) **EP 0 621 128 B1**
(45) Veröffentlichungstag und Bekanntmachung des Hinweises auf die Patenterteilung: **19.01.2000**
(21) Anmeldenummer: 94104475.2
(22) Anmeldetag: 22.03.1994
(51) Int. Cl.: B32B 27/32

(54) **Mehrlagig aufgebauter thermoplastischer Fussbodenbelag auf Polyolefinbasis sowie Verfahren zu dessen Herstellung**
Multilayered thermoplastic floor covering based on polyolefins and method for its production
Revêtement de sol multicouche thermoplastique à base de polyoléfine et son procédé de fabrication

(30) Priorität: 21.04.1993 DE 4313037
(43) Veröffentlichungstag der Anmeldung: 26.10.1994
(73) Patentinhaber: Tarkett Pegulan GmbH & Co. KG, 67227 Frankenthal (DE)
(72) Erfinder: Müller, Norbert, Dr., D-67227 Frankenthal (DE); Rein, Brigitte, D-67065 Ludwigshafen (DE); Cornelius, Michael, D-67240 Bobenheim-Roxheim (DE)
(74) Vertreter: Grussdorf, Jürgen, Dr.

(56) Entgegenhaltungen:
- EP-A- 0 528 194
- WO-A-90/06233
- WO-A-93/12285
- DE-A- 4 107 150
- DE-A- 4 114 085

## Beschreibung

Die vorliegende Erfindung betrifft einen Fußbodenbelag auf der Basis eines Polyolefins oder polyolefinhaltigen Schicht, aus einem Zwischenteil, welches aus Kork oder Korkbahnen oder ggf. aus einer thermoplastischen hochgefüllten Formmasse oder auch aus einer Schaumunterlage auf EVA-Basis besteht, auf der Oberseite von einer transparenten Oberfolie (Nutzschicht) und auf der Unterseite von einem verklebbaren Unterteil umgeben ist, die beide jeweils über eine transparente Siegelschicht mit dem o. g. Zwischenteil verbunden sind.

Aus den DE 41 07 150 und DE 41 07 151 ist bekannt, mehrere solcher Schichten über duromere Klebstoffschichten oder entsprechende Haftvermittlerschichten zu verbinden, was einen erhöhten Arbeitsaufwand und zusätzliche Materialien erfordert. Da diese Materialien nicht zusammen mit den Polyolefinen recyclisiert werden können, müssen solche Bodenbeläge später verbrannt oder die verschiedenen Kunststoffe mühsam getrennt werden.

Aus der DE-A-41 14 085 sind kalandrierte PVC-freie Kunststoff-Folien als Bodenbelag bekannt, die als Bindemittel ein EVA-Copolymerisat und 30 - 70 % Füllstoffe enthalten und ggf. mit einem Vlies- oder Gewebeunterteil versehen sind. Die Schichtdicke der Folien kann durch Dublierung derselben erhöht werden.

Aus der EP-A-0 528 194 sind transparente Abdeckungen für PVC-freie Bodenbeläge bekannt, welche aus VLDPE mit bis zu 2 % Verarbeitungshilfmitteln bestehen und mit Bodenbelägen gemäß der DE-A- 41 14 085 dubliert werden können.

Aus der WO 90-06233 sind mehrschichtige Bodenbeläge bekannt, welche eine aus PP bestehende Dekorschicht, ggf. über eine transparente pigmentierte Schicht mit einer flexiblen Polypropylenschicht vereinigt.

Aus der WO 93-12285 sind recyclingfähige Tuftingteppiche bekannt, bei denen Erstrücken, Polgarn, Textilrücken und Kleber aus derselben Polymerfamilie stammen. Beispielhaft sind Polyamid, Polyester und Polypropylen genannt.

Ziel und Aufgabe der vorliegenden Erfindung ist es daher, einen PVC-freien verklebefähigen Fußbodenverbund mit den entsprechenden Eigenschaften eines Fußbodenverbundes auf PVC-Basis zu finden, bei dem die einzelnen Folienschichten sich auch stoffklassenmäßig entsprechen, der damit auch recyclefähig ist. Der Vorteil liegt darin begründet, daß Reste eines solchen Fußbodenbelags, die sowohl bei der Herstellung, als auch bei der Endverarbeitung zwangsläufig anfallen, ohne Einschränkungen entsorgt werden können, was bei den entsprechenden Fußbodenbelägen auf PVC-Basis nur sehr schwer möglich ist. Dies wird durch die o. g. Erfindung gewährleistet, ohne daß die sonstigen Eigenschaften von Fußbodenbelägen auf PVC-Basis sich verschlechtern, sondern wie z. B. bei dem Verschleiß sich nachweislich sogar verbessern. Ein weiterer erfindungsbedingter Vorteil zeigt sich darin, daß durch die Verwendung der Siegelschicht die Transparenz der Oberfolie bei dem Endprodukt gesteigert wird.

Erfindungsgemäß wurde festgestellt, daß bei der Oberfolie, was Transparenz wie auch Abriebfestigkeit betrifft, 20 bis 80 Gew.-% eines Polyethylens sehr niederer Dichte (VLDPE) mit einem Schmelzindex MFI (190 °C/2, 16 kg) von bis zu 10 g/10 min, vorzugsweise von 0,3 bis 7 g/10 min, mit 20 bis 80 Gew.-%, vorzugsweise 30 bis 40 Gew.-%, eines Polypropylen-Copolymers mit einem Comonomeranteil von bis zu 12 %, vorzugsweise 4 bis 8 %, eine kalandrierte Folie mit einer Stärke von 0,08 bis 1,00 mm ergeben, die die gewünschten Eigenschaften erfüllt. Die transparente Oberfolie kann mit Lichtschutzmitteln wie HALS-Produkten und/oder UV-Absorbern und Verarbeitungshilfen wie Metallsalze von Carbonsäuren, insbesondere Magnesiumstearat, und sterisch gehinderte Phenole und/oder Ester auf Polymerbasis und auch Antistatika enthalten, um eine geschlossene, gut verträgliche Oberfläche zu erhalten, und um die spätere Weiterverarbeitung zum Endprodukt hin zu erleichtern.

Gegenüber herkömmlichen Polyolefinfolien auf PP-Basis ohne den PE-Zusatz zeigt sich hierin eine erhöhte Rutschhemmung bei gleichzeitiger Abnahme der Glätte und ein sehr gutes Abriebverhalten. Zudem kann die Nutzschicht ggf. auch mit einem Konterdruck versehen werden.

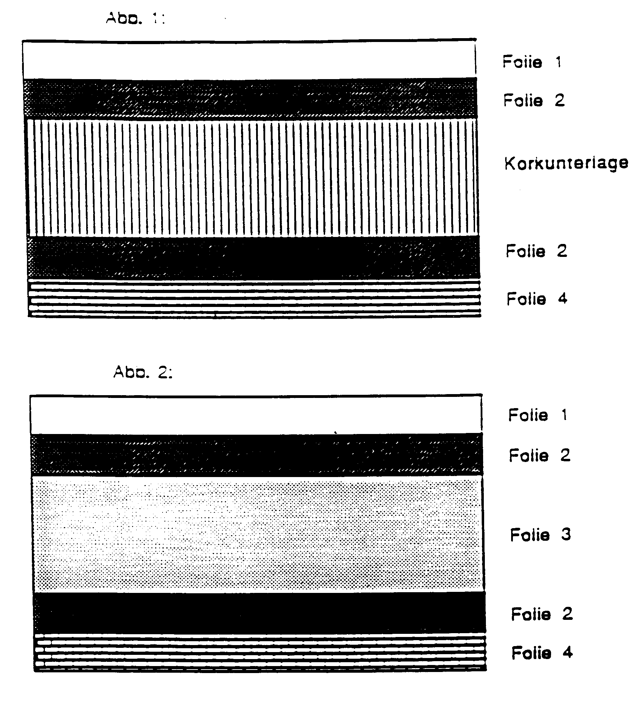

Die Siegelschicht, die das Zwischenteil sowohl mit einer transparenten Nutzschicht wie auch ggf. (s. Abb. 1) mit dem verklebbaren Unterteil direkt verbindet, ist selbst transparent und setzt sich aus einer Mischung von LLDPE mit VLDPE zusammen, die aus DE 41 27 107 bekannt ist. Diese Siegelschicht bewirkt schon bei relativ niedrigen Siegeltemperaturen eine gute Haftung, sowohl zwischen transparenter Nutzschicht und der Zwischenschicht, aus ggf. Kork oder Korkbahnen oder ggf. aus einer thermoplastischen, hochgefüllten Formmasse oder auch aus einer Schaumunterlage auf EVA-Basis, wie sie in der DE-P 42 22 724 beschrieben ist, wie auch zwischen dem gefüllten verklebbaren Unterteil und der Zwischenschicht. Diese Siegelschicht kann sowohl in einem Arbeitsgang zusammen mit der transparenten Nutzschicht bzw. dem verklebbaren Unterteil über einen Breitschlitzextruder coextrudiert, wie auch in getrennten Arbeitsgängen über eine Kalanderanlage hergestellt und anschließend über eine Dubliervorrichtung mit den übrigen Schichten dubliert werden, wobei die Siegelschicht auch mit einem eigenen Dekor bedruckt sein kann. Die Siegelschichten weisen eine Dicke von 50 - 500 µm, vorzugsweise 100 - 200 µm auf.

Wenn die Zwischenschicht aus Gründen der Schalldämmung wie auch der Kunststoff-Wärmeisolierung nicht aus Korkplatten oder Korkbahnen aufgebaut ist, so kann auch eine hochgefüllte Kunststoffolie eingesetzt werden. Diese Folie besteht z. B. aus einer Mischung von bis zu 65 Gew.-%, vorzugsweise 40 bis 60 Gew.-% eines Copolymerisats eines Ethylenacrylsäureesters auf EBA- oder EMA-Basis mit einem Estergehalt von bis zu 40 %, mit bis zu 10 Gew.-%, vorzugsweise 5 bis 8 Gew.-%, eines HDPE mit einer Dichte von > 0,940 g/cm³ und einem Schmelzindex MFI (190 °C/21,6 kg) unter 10 g/10 min oder ggf. mit einem VLDPE mit einer Dichte von < 0,915 g/cm³ und einem Schmelzindex MFI (190 °C/2,16 kg) zwischen 1,0 und 10 g/10 min sowie bis zu 60 Gew.-% eines mineralischen Füllstoffes oder Füllstoffgemisches.

Als Füllstoff wird z. B. Aluminiumhydroxid und/oder Magnesiumhydroxid mit einem mittleren Körnungsdurchmesser von bis zu 35 µm, vorzugsweise 1,0 bis 15 µm, eingesetzt. Ferner können Verarbeitungshilfsmittel auf Basis sterisch gehinderter Phenole und/oder Phosphite und Metallsalze von Carbonsäuren, insbesondere Magnesiumstearat, und ggf. zusätzlich bis zu 20 Gew.-% an Farbkomponenten enthalten sein. Diese Mischung wird zu Folien oder Folienbahnen von bis zu 0,5 mm Stärke auf einer Kalanderanlage ausgezogen. Die auf diese Art und Weise hergestellten Folien oder Folienbahnen werden anschließend auf einem Dublierkalander zu dem Zwischenteil von einer Endstärke von bis zu 3 mm dubliert bzw. tripliert und können ggf. auch mit einem eigenen Dekor bedruckt werden.

Aus der Patentanmeldung DE 41 07 151 ist bekannt, daß gefüllte Unterfolien aus Polypropylen-Polymerisaten eine hohe Oberflächenspannung und damit eine gute Bedruckbarkeit erzielen. Es stellte sich jedoch erfindungsbedingt für das Unterteil heraus, daß bei Verwendung einer Mischung von bis u 60 Gew.-%, vorzugsweise 30 bis 50 Gew.-%, von einem statistischen Copolymer eines Polypropylens mit einem Schmelzindex MFI (230 °C/2,16 kg) von < als 11 g/10 min und bevorzugt 2 bis 8 g/10 min und einem Comonomeranteil von < als 10 % und bevorzugt 3 bis 5 % mit bis zu 45 Gew.-%, vorzugsweise 25 bis 35 Gew.-%, und/oder eines Copolymerisates eines Ethylensäureesters auf EBA oder EMA-Basis mit einem Estergehalt von bis zu 40 % und/oder eines Terpolymers eines Acrylsäureesters mit einem Comonomergehalt von bis zu 40 % und/oder eines Copolymerisates eines Propylens mit Maleinsäureanhydrid und/oder eines Copolymerisates eines Polyethylens mit Maleinsäureanhydrid mit einem Schmelzindex MFI (230 °C/2,16 kg) von bis zu 30 g/10 min und bis zu 60 Gew.-%, vorzugsweise 20 bis 25 Gew.-%, eines mineralischen Füllstoffes oder Füllstoffgemisches, bestehend aus Aluminumhydroxid und/oder Magnesiumhydroxid mit einem mittleren Körnungsdurchmesser von bis zu 35 µm, vorzugsweise 1,0 bis 15 µm, und Verarbeitungshilfsmitteln auf Basis von sterisch gehinderter Phenole und/oder Phosphiten und Metallsalzen von Carbonsäuren, insbesondere Magnesiumstearat, die Verklebbarkeit gesichert wird, wobei ein weiterer Vorteil das Bestehen der Brandprüfung nach DIN 4102/B 1 für den Gesamtverbund ist. Diese Mischung wird auf einer Kalanderanlage zu Folien oder Folienbahnen von einer Stärke von bis zu 0,50 mm ausgezogen. Um die Verklebbarkeit des Unterteils mit dem Untergrund zu erhöhen, kann die auf diese Art und Weise hergestellte Folie oder Folienbahn in einer Coronaanlage einer Coronabehandlung entweder "In-Line" kalanderbezogen oder in einem getrennten Arbeitsgang unterzogen werden.

Anschließend können Nutzschicht (ggf. mit Konterdruck), Zwischenschicht (ggf. mit eigenem Dekor bedruckt) und Unterteil mit der jeweiligen Siegelschicht an einer Dublier- bzw. Triplieranlage zu dem mehrlagig aufgebauten thermoplastischen Fußboden auf Polyolefinbasis zusammengefügt werden. Besteht die Zwischenschicht aus Korkbahnen oder Korkplatten oder einer Schaumunterlage auf EVA-Basis, so können Nutzschicht und Unterteil mit der ggf. jeweiligen Siegelschicht mittels einer Presse oder Preßanlage zusammengeführt werden (s. Abb. 1, 3 und 4).

In den folgenden Beispielen werden ausgewählte Anwendungen beschrieben.

### Beispiele

### Folie 1 (Nutzschicht):

70 Gew.-% eines Polyethylens sehr niederer Dichte (VLDPE) mit einem Schmelzindex MFI (190 °C/2,16 kg) von 1,1 g/10 min (DOWLEX^{R} NG 5065 E) werden mit 30 Gew.-% eines Polypropylen-Random-Copolymers mit einem Comonomergehalt von 5,5 % und einem Schmelzindex MFI (230 °C/2,16 kg) von 1,5 g /10 min (MOPLEN^{R} EP2 S 29 B) und mit 0,2 Gew.-% eines Calciumstearats (CEASIT^{R}I) und 0,2 Gew.-% eines sterisch gehinderten Phenols (IRGANOX^{R} 1010) und mit einem Lichtschutzmittel auf HALS-Basis (TINUVIN^{R} 770 DF) in Höhe von 0,8 Gew.-% versetzt, vorgemischt und in einem Stempelkneter bei 150 °C anplastifiziert und anschließend auf einem Zweiwalzen-Mischwalzwerk weiter durchhomogenisiert, um nachfolgend über eine 4-Walzen-Kalanderanlage zu einer 0,08 bis 1,0 mm dicken transparenten Folie kalandriert zu werden, wobei von der ersten bis zur vierten Kalanderwalze die Verarbeitungstemperatur von 180 auf 170 °C sinkt.

### Folie 2 (Siegelschicht):

Ein Ethylenpolymerisat sehr niederer Dichte (ATTANE^{R} NG 4012 E wird mit 0,1 Gew.-% eines Amidwachses (LOXAMID^{R} E) und 0,2 Gew.-% eines sterisch gehinderten Phenols (IRGANOX^{R} 1010) versetzt, vorgemischt und in einem Stempelkneter bei 125 °C anplastifiziert und anschließend auf einem Zweiwalzen-Mischwalzwerk bei 135 °C weiter durchhomogenisiert, um nachfolgend über eine 4-Walzen-Kalanderanlage zu einer 0,1 bis 0,5 mm starken transparenten Siegelfolie kalandriert zu werden, wobei von der ersten bis zur vierten Kalanderwalze die Verarbeitungstemperatur von 145 auf 130 °C sinkt.

### Folie 3 (Zwischenteil):

Ein Copolymerisat eines Ethylenacrylsäureesters auf EMA-Basis mit einem Estergehalt von 28 % (LOTRYL^{R} 29 MA 03) wird mit 50 Gew.-% Aluminiumhydroxid (MARTINAL^{R} ON 310), 1 Gew.-% eines Metallsalzes der Stearinsäure (ZINCUM^{R} 5) und 1 Gew.-% eines Verarbeitungsstabilisators auf Phosphitbasis wie auch sterisch gehinderter Phenole (IRGANOX^{R} B 220) vorgemischt und in einem Stempelkneter bei 130 °C anplastifiziert und anschließend auf einem nachgeschalteten Zweiwalzen-Mischwalzwerk weiter durchhomogenisiert, um nachfolgend über eine 4-Walzen-Kalanderanlage zu einer 0,5 mm starken Folie kalandriert zu werden, wobei von der ersten bis zur vierten Kalanderwalze die Verarbeitungstemperatur von 145 bis 130 °C sinkt. Die auf diese Art und Weise erzeugten Einzelfolien werden nachfolgend auf einer Dublierkalanderanlage zu einer Endfolie von bis zu 3 mm Dicke dubliert bzw. tripliert.

### Folie 4 (Unterteil):

25 Gew.-% eines Polypropylen-Random-Copolymers mit einem Comonomergehalt von ca. 4 % und einem Schmelzindex MFI (230 °C/2,16 kg) von 1,5 g/10 min (SHELL^{R} PLZ 838) werden mit 25 Gew.-% eines Copolymerisates eines Ethylenacrylsäureesters auf EMA-Basis mit einem Estergehalt von 28 % (LOTRYL^{R} 29 MA 03), mit 50 Gew.-% Aluminiumhydroxid (MARTINAL^{R} ON 310), mit 1 Gew.-% eines Metallsalzes der Stearinsäure (ZINCUM^{R} 5) und mit 1 Gew.-% eines Verarbeitungsstabilisators auf Phosphitbasis wie auch sterisch gehinderter Phenole (IRGANOX^{R} B 220) vorgemischt und in einem Stempelkneter bei 150 °C anplastifiziert und anschließend auf einem nachgeschalteten Zweiwalzen-Mischwalzwerk weiter durchhomogenisiert, um nachfolgend über eine 4-Walzen-Kalanderanlage zu einer Folie von bis zu 0,50 mm Stärke kalandriert zu werden, wobei von der ersten bis zur vierten Kalanderwalze die Verarbeitungstemperatur von 170 auf 160 °C sinkt.

### Anwendungsbeispiel 1 (Abb. 1):

Auf einer Dublierkalanderanlage werden Folie 1 (Nutzschicht) und Folie 2 (Siegelschicht) zu einer bis 1,5 mm starken transparenten Endfolie zusammengefügt, welche anschließend in einer Presse oder Preßanlage bei Temperaturen von 140 bis 150 °C mit Lagen aus Kork oder Korkplatten verpreßt wird. Die Korkunterlage wird noch mit Folie 2 (Siegelschicht) und Folie 4 (verklebbare Unterschicht) auch bei Temperaturen von 140 bis 150 °C auf einer Presse oder Preßanlage zum Endprodukt verpreßt.

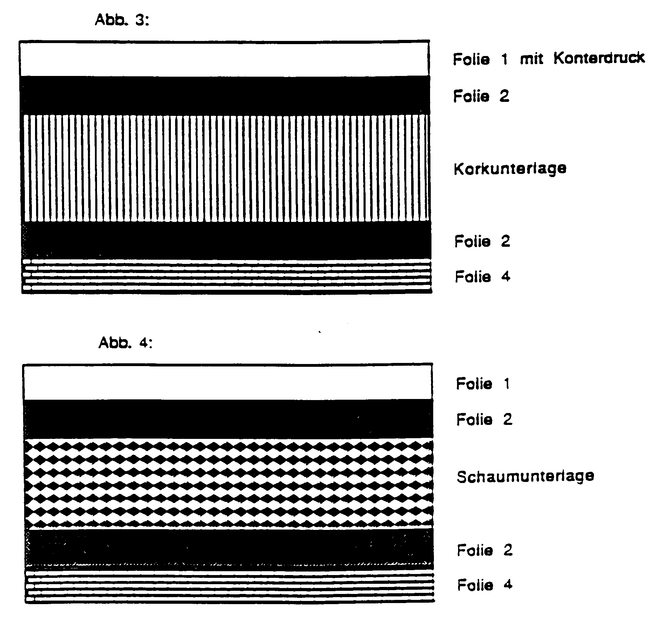

### Anwendungsbeispiel 2 (Abb. 2):

Auf einer Dublierkalanderanlage werden Folie 1 (Nutzschicht) und Folie 2 (Siegelschicht) zu einer 1,5 mm starken Folie dubliert; anschließend werden Folie 4 (verklebbare Unterschicht) mit Folie 2 (Siegelschicht) zu einer 1 mm starken Folie dubliert. Das gefüllte Zwischenteil besteht aus der Folie 3, die auf einer Dublierkalanderanlage zu einer Endstärke von 3 mm dubliert bzw. tripliert wird. Im Anschluß daran werden alle 3 auf diese Art und Weise hergestellten Folien ebenfalls auf einer Dublierkalanderanlage zu einem mehrlagigen Fußbodenbelag von einer Endstärke von 5,5 mm dubliert.

### Anwendungsbeispiel 3 (Abb. 3):

Auf einer Dublierkalanderanlage werden die mit einem Konterdruck versehene Folie 1 (Nutzschicht) und Folie 2 (Siegelschicht) zu einer 1,5 mm starken Folie dubliert; anschließend werden Folie 4 (verklebbare Unterschicht) mit Folie 2 (Siegelschicht) zu einer 1 mm starken Folie dubliert. Im Anschluß daran werden diese beiden Folien auf einer Presse oder Preßanlage bei Temperaturen von 140 bis 150 °C mit Lagen aus Kork oder Korkbahnen verpreßt.

### Anwendungsbeispiel 4 (Abb. 4):

Auf einer Dublierkalanderanlage werden Folie 1 (Nutzschicht) und Folie 2 (Siegelschicht) zu einer 1,5 mm starken transparenten Endfolie zusammengefügt. Anschließend werden Folie 2 (Siegelschicht) und Folie 4 (verklebbare Unterschicht) zu einer 1 mm starken Endfolie dubliert, auf der dann die Schaumunterlage gemäß DE-P 42 22 724 aufgebracht wird. Im Anschluß daran wird die 1,5 mm starke Endfolie mit der Schaumunterlage verbunden.

Der auf diese Art und Weise mehrlagig aufgebaute Fußbodenbelag (s. Bsp. 1) besitzt folgende Eigenschaften:

| | | | |
|---|---|---|---|
| Shore-Härte | A: | 87 | DIN 53505 |
| | D: | 31 | DIN 53505 |

| Eindruckverhalten | | | |
|---|---|---|---|
| 2,5 h Belastung: | | 0,32 mm | DIN 51955 |
| 2,5 h Entlastung: | | 88 % | DIN 51955 |

| Schüsselung: | | | |
|---|---|---|---|
| längs: | | 0 mm | DIN 51962 |
| quer: | | 0 mm | DIN 51962 |
| Verschleiß: | | 0,99 mm | DIN 51963 |
| entsprechender Belag auf PVC-Basis: | | 1,95 mm | |

| Gleitverhalten (längs) | | | |
|---|---|---|---|
| trocken: | | 90 cm | gemäß BAM-Prüfung |
| naß: | | 112 cm | (StVZO § 35d) |

| entsprechender Belag auf PVC-Basis: | | | |
|---|---|---|---|
| trocken: | | 140 cm | gemäß BAM-Prüfung |
| naß: | | 155 cm | (StVZO § 35d) |
| Brandprüfung: | | NBR | MVSS 302 |
| | | B 2 | DIN 4102 |

| Verschleißwerte der transparenten Nutzschicht (Frankenthaler Methode) | | |
|---|---|---|
| PE | PP | Werte |
| 70 Gew.-% | 30 Gew.-% | 0,68 |
| 65 Gew.-% | 35 Gew.-% | 0,69 |
| 60 Gew.-% | 40 Gew.-% | 0,74 |
| 40 Gew.-% | 60 Gew.-% | 0,36 |

## Patentansprüche

1. Fußbodenbelag auf der Basis von mindestens einer Polyolefin- oder polyolefinhaltigen Schicht oder Folie, wobei die mehrschichtige Fußbodenbelagfolie 5 Schichten oder Folien aufweist, **dadurch gekennzeichnet**, daß die eine Schicht aus einer transparenten Oberfolie besteht, eine Schichtdicke von 80 bis 1000 µm aufweist, aus einer polyolefinhaltigen Kunststoffmischung aus 20 bis 80 Gew.-% eines Polyethylens sehr niederer Dichte (VLDPE) mit einem Schmelzindex MFI (190 °C/2,16 kg) von bis zu 10 g/10 min und 20 bis 80 Gew.-% eines Polypropylen-Copolymers mit einem Comonomergehalt von bis zu 12 % besteht und bis zu 4 Gew.-% an Verarbeitungshilfs-mitteln enthält, welche Oberfolie über eine transparente Siegelschicht, die aus VLDPE oder einer Polyolefinmischung aus 0-50 Gew.-% LLDPE und 50-100 Gew.-% VLDPE besteht und eine Schichtdicke von 5 bis 500 µm besitzt, mit einem Zwischenteil, welches aus einem hochgefüllten Polyolefin oder aus einer hochgefüllten Polyolefinmischung mit einer Schichtdicke von bis zu 3 mm, wobei der Füllstoffanteil bis zu 60 Gew.-% ausmacht, oder auch Korkplatten oder Korkbahnen oder auch aus einer Schaumunterlage auf EVA-Basis besteht, verbunden ist, wobei das Zwischenteil über eine zweite transparente Siegelschicht der vorstehenden Zusammensetzung mit einem Unterteil verbunden ist, welches aus einer Füllstoff enthaltenden Polyolefinmischung mit einer Schichtdicke von bis zu 500 µm besteht, wobei die Mischung bis zu 60 Gew.-% von einem statistischen Copolymer eines Polypropylens mit einem Schmelzindex MFI (230 °C/2,16 kg) von < als 11 g/10 min und einem Comonomergehalt von < als 10 % mit bis zu 45 Gew.-% eines Copolymerisates eines Ethylenacrylsäureesters auf EBA- oder EMA-Basis mit einem Estergehalt von bis zu 40 % und/oder eines Terpolymers eines Acrylsäureesters mit einem Comonomergehalt von bis zu 40 % und/oder eines Copolymerisates eines Polypropylens mit Maleinsäureanhydrid und/oder eines Copolymerisates eines Polyethylens mit Maleinsäureanhydrid mit einem Schmelzindex MFI (230 °C/2,16 kg) von bis zu 30 g/10 min und bis zu 60 Gew.-% eines mineralischen Füllstoffes oder Füllstoffgemisches, bestehend aus Aluminiumhydroxid und/oder Magnesiumhydroxid mit einem mittleren Körnungsdurchmesser von bis zu 35 µm und Verarbeitungshilfsmitteln auf Basis sterisch gehinderter Phenole und/oder Phosphiten und Metallsalzen von Carbonsäuren, insbesondere Magnesiumstearat, besteht.

2. Fußbodenbelag nach Anspruch 1, **dadurch gekennzeichnet**, daß das VLDPE der Kunststoffmischung der Oberfolie einen Schmelzindex von 0,3 bis 7 g/10 min aufweist und diese Kunststoffmischung einen Anteil von 30 bis 40 Gew.-% Polypropylen-Copolymer mit einem Comonomergehalt von 4 bis 8 % enthält.

3. Fußbodenbelag nach Anspruch 1, **dadurch gekennzeichnet**, daß das Zwischenteil eine Mischung aus bis zu 65 Gew.-%, vorzugsweise 40 bis 60 Gew.-%, eines Copolymerisates eines Ethylenacrylsäureesters auf EBA- oder EMA-Basis mit einem Estergehalt von bis zu 40 % mit bis zu 10 Gew.-%, vorzugsweise 5 bis 8 Gew. -%, eines HDPE mit einer Dichte > 0,940 g/cm³ und einem Schmelzindex MFI (190 °C/ 21,6 kg) unter 10 g/10 min oder ggf. mit einem VLDPE mit einer Dichte von < 0,915 g/cm³ und einem Schmelzindex MFI (190 °C/2,16 kg) zwischen 1,0 und 10 g/10 min sowie eines mineralischen Füllstoffes oder Füllstoffgemisches, bestehend aus Aluminiumhydroxid und/oder Magnesiumhydroxid mit einem mittleren Körnungsdurchmesser von bis zu 35 µm, vorzugsweise 1,0 bis 15 µm, und bis zu 2 Gew.-% an Verarbeitungshilfsmitteln auf Basis sterisch gehinderter Phenole und/oder Phosphiten und Metallsalzen von Carbonsäure, insbesondere Magnesiumstearat, und ggf. zusätzlich bis zu 20 Gew.-% an Farbkomponenten, ist.

4. Fußbodenbelag nach Anspruch 1, **dadurch gekennzeichnet**, daß das Unterteil eine Mischung von 30 bis 50 Gew.-%, von einem statistischen Copolymer eines Polypropylens mit einem Schmelzindex MFI (230 °C/2, 16 kg) von 2 bis 8 g/10 min und einem Comonomergehalt von 3 bis 5 % mit 25 bis 35 Gew.-% eines Copolymerisates eines Ethylenacrylsäureesters auf EBA- oder EMA-Basis mit einem Estergehalt von bis zu 40 % und/oder eines Terpolymers eines Acrylsäureesters mit einem Comonomergehalt von bis zu 40 % und/oder eines Copolymerisates eines Polypropylens mit Maleinsäureanhydrid und/oder eines Copolymerisates eines Polyethylens mit Maleinsäureanhydrid mit einem Schmelzindex MFI (230 °C/2, 16 kg) von bis zu 30 g/10 min und 20 bis 25 Gew.-% eines mineralischen Füllstoffes oder Füllstoffgemisches, bestehend aus Aluminiumhydroxid und/oder Magnesiumhydroxid mit einem mittleren Körnungsdurchmesser von 1,0 bis 15 µm, und Verarbeitungshilfsmitteln auf Basis sterisch gehinderter Phenole und/oder Phosphiten und Metallsalzen von Carbonsäuren, insbesondere Magnesiumstearat, ist.

5. Verfahren zur Herstellung von Bodenbelägen gemäß einem der Ansprüche 1 bis 4, **dadurch gekennzeichnet**, daß man Folien oder Folienbahnen der angegebenen Zusammensetzung in an sich bekannter Weise durch Kalandrieren oder Extrudieren herstellt und durch Dublizieren unter Wärme und Druck vereinigt.

6. Verfahren nach Anspruch 5, **dadurch gekennzeichnet**, daß eine oder mehrere der Folien oder Folienbahnen mit einem Dekor bedruckt ist.

7. Verfahren nach einem der Ansprüche 5 oder 6, **dadurch gekennzeichnet**, daß die transparente Nutzschicht mit einer transparenten Siegelschicht zusammen über einen herkömmlichen Breitschlitzextruder coextrudiert wird.

8. Verfahren zur Herstellung von Folien oder Folienbahnen nach einem der Ansprüche 5 oder 6, **dadurch gekennzeichnet**, daß die transparente Siegelschicht mit einem gefüllten Unterteil zusammen über einen herkömmlichen Breitschlitzextruder coextrudiert wird.

9. Verfahren zur Herstellung eines mehrschichtig aufgebauten Fußbodenbelags nach einem der Ansprüche 1 bis 4, **dadurch gekennzeichnet**, daß die Zwischenschicht aus Kork oder einer Schaumunterlage auf EVA-Basis aufgebaut ist und die Folien oder Folienbahnen mit dieser Zwischenschicht mittels einer Presse oder Preßanlage zusammengeführt werden.

10. Verfahren nach einem oder mehreren der Ansprüche 5 bis 9, **dadurch gekennzeichnet**, daß eine oder mehrere der Folien einer Coronabehandlung ausgesetzt wird.

## Claims

1. Floor covering on the basis of at least one polyolefine or polyolefine-containing layer or foil, whereby the multi-layer floor covering 5 has layers or foils, characterised in that one layer consists of a transparent upper foil, has a layer thickness of 80 to 1000 µm, consists of a polyolefine-containing synthetic material mixture of 20 to 80 wt.% of a polyethylene of very low density (VLDPE) with a melt index MFI (190°C/2.16 kg) of up to 10 g/10 min and 20 to 80 wt.% of a polypropylene co-polymer with a co-monomer content of up to 12% and contains up to 4 wt.% of processing adjuvants, which upper foil is connected via a transparent sealing layer, which consists of VLDPE or of a polyolefine mixture of 0 - 50 wt.% LLDPE and 50 - 100 wt.% VLDPE and possesses a layer thickness of 5 to 500 µm, with an intermediate part which consists of a highly-filled polyolefine or of a highly-filled polyolefine mixture with a layer thickness of up to 3 mm, whereby the proportion of filling material accounts for up to 60 wt.%, or also cork sheets or cork strips or also of a foamed substrate based on EVA, whereby the intermediate part is connected via a second transparent sealing layer of the above-given composition with an underpart which consists of a filling material containing polyolefine mixture with a layer thickness of up to 500 µm, whereby the mixture consists of up to 60 wt.% of a statistical co-polymer of a polypropylene with a melt index MFI (230°C/2.16 kg) of < than 11 g/10 min and a co-monomer content of < than 10% with up to 45 wt.% of a co-polymer of an ethylene-acrylic acid ester based on EBA or EMA with an ester content of up to 40% and/or of a terpolymer of an acrylic acid ester with a co-monomer content of up to 40% and/or of a co-polymer of a polypropylene with maleic acid anhydride and/or of a co-polymer of a polyethylene with maleic acid anhydride with a melt index MFI (230°C/2.16 kg) of up to 30 g/10 min and up to 60 wt.% of a mineral filling material or filling material mixture, consisting of aluminium hydroxide and/or magnesium hydroxide with an average grain diameter of up to 35 µm and processing adjuvants based on stericly-hindered phenols and/or phosphites and metal salts of carboxylic acids, especially magnesium stearate.

2. Floor covering according to claim 1, characterised in that the VLDPE of the synthetic material mixture of the upper foil has a melt index of 0.3 to 7 g/10 min and this synthetic material mixture contains a proportion of 30 to 40 wt.% of polypropylene co-polymer with a co-monomer content of 4 to 8%.

3. Floor covering according to claim 1, characterised in that the intermediate part is a mixture of up to 65 wt.%, preferably 40 to 60 wt.%, of a co-polymer of an ethylene-acrylic acid ester based on EBA or EMA with an ester content of up to 40% with up to 10 wt.%, preferably 5 to 8 wt.%, of an HDPE with a density of > 0.940 g/cm³ and a melt index MFI (190°C/21.6 kg) of below 10 g/10 min or possibly with a VLDPE with a density of > 0.915 g/cm³ and a melt index MFI (190°C/2.16 kg) between 1.0 and 10 g/min, as well as of a mineral filling material or filling material mixture, consisting of aluminium hydroxide and/or magnesium hydroxide with an average grain diameter of up to 35 µm, preferably 1.0 to 15 µm, and up to 2 wt.% of processing adjuvants based on stericly-hindered phenols and/or phosphites and metal salts of carboxylic acids, especially magnesium stearate, and possibly in addition up to 20 wt.% of colour components.

4. Floor covering according to claim 1, characterised in that the lower part is a mixture of 30 to 50 wt.% of a statistical co-polymer of a polypropylene with a melt index MFI (230°C/2.16 kg) of 2 to 8 g/10 min and a co-monomer content of 3 to 5% with 25 to 35 wt.% of a co-polymer of an ethylene-acrylic acid ester based on EBA or EMA with an ester content of up to 40% and/or of a terpolymer of an acrylic acid ester with a co-monomer content of up to 40% and/or of a co-polymer of a polypropylene with maleic acid anhydride and/or of a co-polymer of a polyethylene with maleic acid anhydride with a melt index MFI (230°C/2.16 kg) of up to 30 g/10 min and 20 to 25 wt.% of a mineral filling material or filling material mixture, consisting of aluminium hydroxide and/or magnesium hydroxide with an average grain diameter of 1.0 to 15 µm and processing adjuvants based on stericly-hindered phenols and/or phosphites and metal salts of carboxylic acids, especially magnesium stearate.

5. Process for the production of floor coverings according to one of claims 1 to 4, characterised in that one produces foil or foil strips of the given composition in per se known manner by calendering or extruding and combines by doubling under heat and pressure.

6. Process according to claim 5, characterised in that one or more of the foils or foil strips is printed with a decoration.

7. Process according to one of claims 5 or 5, characterised in that the transparent wear layer is co-extruded together with a transparent sealing layer via a conventional wide-slot extruder.

8. Process for the production of foils or foil strips according to one of claims 5 or 6, characterised in that the transparent sealing layer is co-extruded together with a filled lower part via a conventional wide-slot extruder.

9. Process for the production of a multi-layer constructed floor covering according to one of claims 1 to 4, characterised in that the intermediate layer is made of cork or of a foam underlay based on EVA and the foils or foil strips are combined with this intermediate layer by means of a press or pressing plant.

10. Process according to one or more of claims 5 to 9, characterised in that one or more of the foils is subjected to a corona treatment.

## Revendications

1. Revêtement de sol à base d'au moins une couche ou feuille de polyoléfine ou d'au moins une couche ou feuille contenant de la polyoléfine, la feuille de revêtement de sol multicouche présentant cinq couches ou cinq feuilles, caractérisé en ce que la première couche est constituée d'une feuille supérieure transparente, présente une épaisseur de couche de 80 à 1.000 µm, est constituée par un mélange de matières synthétiques contenant de la polyoléfine, constitué, à concurrence de 20 à 80% en poids, d'un polyéthylène très basse densité (VLDPE) possédant un indice de fusion MFI (190°C/2,16 kg) s'élevant jusqu'à 10 g/10 min, et à concurrence de 20 à 80% en poids, d'un copolymère de polypropylène possédant une teneur en comonomères s'élevant jusqu'à 12%, et contient des adjuvants de traitement jusqu'à concurrence de 40% en poids, ladite feuille supérieure étant reliée, via une couche thermosoudable transparente qui est constituée par du VLDPE ou par un mélange de polyoléfines constitué de LLDPE à concurrence de 0 à 50% en poids et de VLDPE à concurrence de 50 à 100% en poids et qui possède une épaisseur de couche de 5 à 500 µm, à une partie intermédiaire qui est constituée par une polyoléfine possédant une teneur élevée en matières de charge ou par un mélange de polyoléfines possédant une teneur élevée en matières de charge, dont l'épaisseur de couche s'élève jusqu'à 3 mm, la fraction en matières de charges s'élevant jusqu'à 60% en poids, ou encore par des plaques de liège ou par des bandes de liège ou encore par un substrat en mousse à base de EVA, la partie intermédiaire étant reliée, via une seconde couche thermosoudable transparente possédant la composition indiquée ci-dessus, à une partie inférieure qui est constituée par un mélange de polyoléfines contenant des matières de charge et dont l'épaisseur de couche s'élève jusqu'à 500 µm, le mélange étant constitué, jusqu'à concurrence de 60% en poids, par un copolymère statistique d'un polypropylène possédant un indice de fusion MFI (230°C/2,16 kg) < 11 g/10 min et dont la teneur en comonomères est < 10%, avec jusqu'à concurrence de 45% en poids, un copolymère d'éthylène-ester acrylique à base de EBA ou de EMA dont la teneur en ester s'élève jusqu'à 40% et/ou un terpolymère d'un ester acrylique possédant une teneur en comonomères s'élevant jusqu'à 40% et/ou un copolymère d'un polypropylène avec de l'anhydride maléique et/ou un copolymère d'un polyéthylène avec de l'anhydride maléique possédant un indice de fusion MFI (230°C, 2,16 kg) s'élevant jusqu'à 30 g/10 min, et jusqu'à concurrence de 60% en poids, par une matière de charge minérale ou par un mélange de matières de charge minérales constitué par de l'hydroxyde d'aluminium et/ou par de l'hydroxyde de magnésium dont le diamètre moyen des grains s'élève jusqu'à 35 µm, et par des adjuvants de traitement à base de phénols à empêchement stérique et/ou de phosphites, et par des sels métalliques d'acides carboxyliques, en particulier le stéarate de magnésium.

2. Revêtement de sol selon la revendication 1, caractérisé en ce que le VLDPE du mélange de matières synthétiques de la feuille supérieure présente un indice de fusion de 0,3 à 7 g/10 min, ce mélange de matières synthétiques contenant une fraction, à concurrence de 30 à 40% en poids, d'un copolymère de polypropylène possédant une teneur en comonomères de 4 à 8%.

3. Revêtement de sol selon la revendication 1, caractérisé en ce que la partie intermédiaire est un mélange constitué, jusqu'à concurrence de 65% en poids, de préférence à concurrence de 40 à 60% en poids, d'un copolymère d'éthylène-ester acrylique à base de EBA ou de EMA dont la teneur en ester s'élève jusqu'à 40%, avec jusqu'à concurrence de 10% en poids, de préférence, à concurrence de 5 à 8% en poids, un HDPE dont la densité est > 0,940 g/cm³ et dont l'indice de fusion MFI (190°C, 21,6 kg) est inférieur à 10 g/10 min ou le cas échéant avec un VLDPE dont la densité < 915 g/cm³ et dont l'indice de fusion MFI (190°C, 2,16 kg) se situe entre 1,0 et 10 g/10 min, ainsi que d'une matière de charge minérale ou d'un mélange de matières de charge minérales constitué par de l'hydroxyde d'aluminium et/ou par de l'hydroxyde de magnésium dont le diamètre moyen des grains s'élève jusqu'à 35 µm, de préférence de 1,0 à 15 µm, et jusqu'à concurrence de 2% en poids, d'adjuvants de traitement à base de phénols à empêchement stérique et/ou de phosphites, ainsi que de sels métalliques d'acides carboxyliques, en particulier le stéarate de magnésium, et le cas échéant en outre, jusqu'à concurrence de 20% en poids, de composants de coloration.

4. Revêtement de sol selon la revendication 1, caractérisé en ce que la partie inférieure est un mélange constitué, à concurrence de 30 à 50% en poids, d'un copolymère statistique d'un polypropylène dont l'indice de fusion MFI (230°C/2,16 kg) s'élève de 2 à 8 g/10 min et dont la teneur en comonomères s'élève de 3 à 5%, avec à concurrence de 25 à 35% en poids, un copolymère d'éthylène-ester acrylique à base de EBA ou de EMA, dont la teneur en ester s'élève jusqu'à 40%, et/ou un terpolymère d'ester acrylique dont la teneur en comonomères s'élève jusqu'à 40%, et/ou un copolymère d'un polypropylène avec de l'anhydride maléique et/ou un copolymère d'un polyéthylène avec de l'anhydride maléique dont l'indice de fusion MFI (230°C, 2,16 kg) s'élève jusqu'à 30 g/10 min, et à concurrence de 20 à 25% en poids, d'une matière de charge minérale ou d'un mélange de matières de charge minérales constitué par de l'hydroxyde d'aluminium et/ou par de l'hydroxyde de magnésium dont le diamètre moyen des grains s'élève de 1,0 à 15 µm, et d'adjuvants de traitement à base de phénols à empêchement stérique et/ou de phosphites, ainsi que de sels métalliques d'acides carboxyliques, en particulier le stéarate de magnésium.

5. Procédé pour la fabrication de revêtements de sols selon l'une quelconque des revendications 1 à 4, caractérisé en ce qu'on prépare des feuilles ou des bandes de feuilles possédant la composition indiquée, d'une manière connue en soi, par calandrage ou par extrusion, et on les combine par doublage dans des conditions de chaleur et de pression.

6. Procédé selon la revendication 5, caractérisé en ce qu'une ou plusieurs des feuilles ou des bandes de feuilles est ou sont imprimées avec une décoration.

7. Procédé selon l'une quelconque des revendications 5 ou 6, caractérisé en ce que la couche d'usure transparente est coextrudée de manière conjointe avec une couche thermosoudable transparente via une extrudeuse habituelle à fente large.

8. Procédé pour la préparation de feuilles ou de bandes de feuilles selon l'une quelconque des revendications 5 ou 6, caractérisé en ce qu'on soumet la couche thermosoudable transparente à une coextrusion de manière conjointe avec une partie inférieure contenant des matières de charge, via une extrudeuse habituelle à fente large.

9. Procédé pour la fabrication d'un revêtement de sol de structure multicouche selon l'une quelconque des revendications 1 à 4, caractérisé en ce que la couche intermédiaire est composée de liège ou d'un substrat en mousse à base de EVA et les feuilles ou les bandes de feuilles sont guidées de manière conjointe avec cette couche intermédiaire à l'aide d'une presse ou d'une installation de presse.

10. Procédé selon une ou plusieurs des revendications 5 à 9, caractérisé en ce qu'on soumet une ou plusieurs des feuilles à un traitement par décharge corona.
